Europäisches Patentamt

European Patent Office

Office européen des brevets

(11) Veröffentlichungsnummer: **0 114 666**
**A2**

(12) # EUROPÄISCHE PATENTANMELDUNG

(21) Anmeldenummer: **84100529.1**

(22) Anmeldetag: **19.01.84**

(51) Int. Cl.³: **G 06 K 7/10**

(30) Priorität: **21.01.83 DE 3301904**

(43) Veröffentlichungstag der Anmeldung:
**01.08.84 Patentblatt 84/31**

(84) Benannte Vertragsstaaten:
**AT BE CH DE FR GB IT LI NL SE**

(71) Anmelder: **Gebhardt Fördertechnik GmbH**
**Postfach 304**
**D-6920 Sinsheim(DE)**

(72) Erfinder: **Felder, Hans-Christian, Dipl.-Ing.**
**Forsthausstrasse 12**
**D-6072 Dreieichenhain(DE)**

(74) Vertreter: **Neugebauer, Bernhard**
**Tölzer Strasse 7**
**D-7100 Heilbronn(DE)**

(54) **Lesevorrichtung für Aufdrucke auf bewegtem Stückgut.**

(57) Stückgüter müssen oft in großer Anzahl für eine Sortierung oder Nachbehandlung erfaßt werden, um sie der zugeordneten Stelle bzw. Nachbehandlung zuzuführen. Diesem Zweck dienen Lesegeräte für Aufdrucke auf dem Stückgut, das auf einem Transportmittel durch das Aufnahmefeld einer Aufnahmekamera bewegt wird, wobei ein im Sichtfeld der Aufnahmekamera befindlicher, aus Punkten gebildeter Aufdruck erfaßt und in Signale zur Steuerung der nachfolgenden Abläufe umgesetzt wird. Das Herstellen des Aufdruckes und dessen Ablesung soll vereinfacht und verbessert werden. Zur Lösung dieser Aufgabe wird das Aufnahmefeld durch eine Rasterung aufgelöst, deren Rastweite höchstns so groß ist wie der Durchmesser eines Punktes des Zeichens im Aufdruck.

FIG. 2

Lesevorrichtung für Aufdrucke auf bewegtem Stückgut

Die Erfindung betrifft eine Lesevorrichtung für Aufdrucke auf insbesondere bewegtem Stückgut, das auf einem Transportmittel durch das Aufnahmefeld einer Aufnahmekamera bewegt wird, wobei ein im Sichtfeld der Aufnahmekamera befindlicher, aus Punkten gebildeter Aufdruck erfaßt und in Signale zur Steuerung nachfolgender Abläufe umgesetzt wird.

Aus der DE-OS 30 10 112 ist bereits eine Anordnung zur automatischen Sortierung von Stückgütern bekannt, bei der eine Code-Marke mit rotationssymmetrischer Struktur als Erkennungsmerkmal vorgesehen ist, in der Buchstaben und Ziffernfolgen verschlüsselt enthalten sind, die durch eine foto-elektrische Anordnung in elektrische Signale umgesetzt werden und so zur Steuerung der Nachfolgeabläufe dienen. Diese Steuerung setzt nicht nur eine Verschlüsselung der Ziele voraus, sondern erfordert auch eine bestimmte Struktur, die nur auf besonderen Druckern hergestellt werden kann. Das Drucken und Aufbringen der Code-Marke ist somit aufwendig, wobei die Code-Marke selbst nicht unmittelbar abgelesen werden kann.

Aufgabe der Erfindung ist es daher, das Herstellen des Aufdruckes und dessen Ablesung zu vereinfachen.

Diese Aufgabe wird durch die Erfindung dadurch gelöst, daß das Aufnahmefeld durch eine Rasterung aufgelöst wird, deren Rastweite höchstens so groß ist wie der Durchmesser eines Punktes des Zeichens im Aufdruck.

Die mit der Erfindung erzielten Vorteile bestehen insbesondere darin, daß durch die Rasterung ein hohes Auflösevermögen entsteht, durch das auch kleine Zeichen fehlerfrei gelesen und ausgewertet werden können. Die Zeichen können ferner mit handelsüblichen Druckern hergestellt werden, so daß besondere Druckeinrichtungen entfallen. Infolge der hohen Auflösung können die Zeichen auch in Klarschrift gedruckt werden, so daß die Beschriftung auch unmittelbar von Personen gelesen und kontrolliert werden kann. Eine Übertragung in Code-Zeichen kann somit entfallen. Damit vereinfacht sich zusätzlich das Beschriften und Überwachen.

Weitere Merkmale der Erfindung sind den Unteransprüchen zu entnehmen.

Ein Ausführungsbeispiel der Erfindung ist in der Zeichnung dargestellt und wird im folgenden näher beschrieben.
Es zeigen:
Fig. 1  eine schematische Darstellung der Lesevorrichtung;
Fig. 2  die Darstellung eines Aufdruckes.

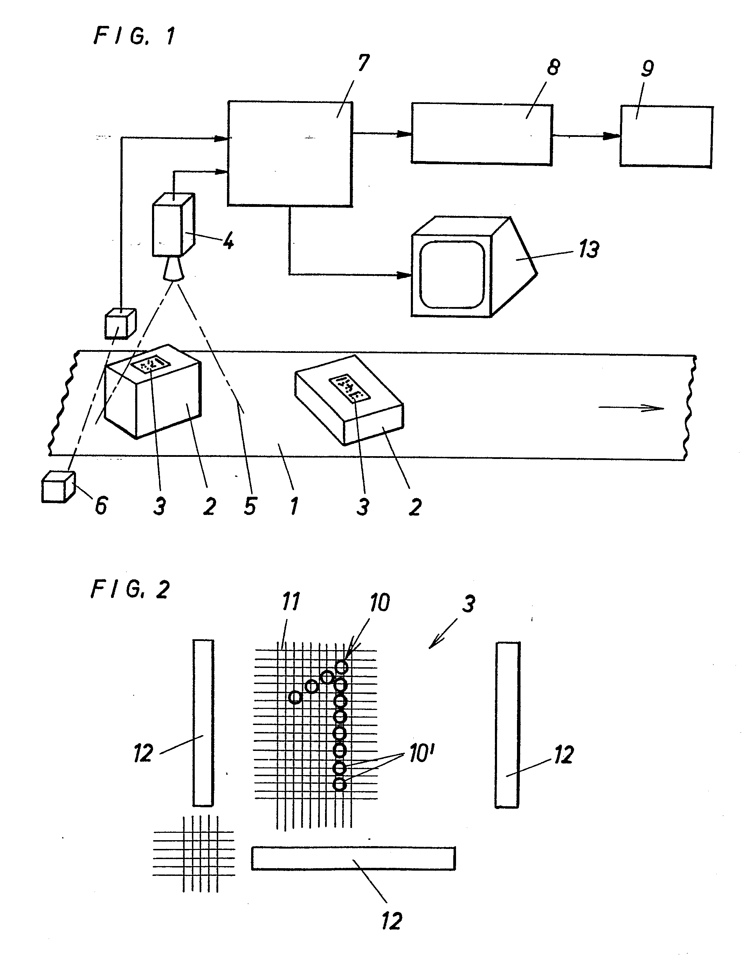

In Fig. 1 ist ein Fördermittel 1 dargestellt, auf dem Stückgut 2 transportiert wird. Das Fördermittel 1 kann in beliebiger Weise als Rollen-, Band- oder Kettenförderer ausgebildet sein. Das auf diesem Fördermittel 1 transportierte Stückgut 2 trägt auf seiner nach oben ragenden Fläche einen Aufdruck 3. Oberhalb dem Fördermittel 1 ist eine Aufnahmekamera 4 in Gestalt einer Videokamera für Industrieeinsatz so angeordnet, daß jedes Stückgut 2 das Aufnahmefeld 5 dieser Aufnahmekamera 4 passieren muß. Das Aufnahmefeld 5 der Aufnahmekamera 4 erstreckt sich über die ganze Breite des Fördermittels 1, so jedes Stückgut 2 unausgerichtet und zusätzlich in seiner Winkelstellung zur Transportrichtung unabhängig den Aufnahmebereich 5 durchwandern kann.

Der Eintritt in das Aufnahmefeld 5 wird durch eine Lichtschranke 6 o. dgl. kontrolliert und an ein Hauptsteuergerät 7 weitergeleitet, das der Mikroprozessorsteuerung und Bildauswertung, also als Bildauswertesystem dient. Dort wird das aufgenommene Bild von einem modularen Mikroprozessor analysiert und in Signale umgesetzt, die an der nachgeordneten Schnittstelle 8 als Daten ausgegeben werden. Diese Daten dienen zur Steuerung nachfolgender Abläufe, wie Zielsteuerung, Sortierung, Bearbeitungen o. dgl., und werden an eine Datenverwertung weitergegeben. Zur Kontrolle ist am Hauptsteuergerät 7 noch ein Monitor 13 angeschlossen. Es ist ersichtlich, daß die der Aufnahmekamera 4 nachgeordneten Geräte 7, 8, 9 und 13 getrennt aufstellbar sind, so daß die Aufstellung der Lesevorrichtung den jeweils vorhandenen räumlichen Verhältnissen angepaßt werden kann.

Die Fig. 2 zeigt den Aufdruck 3 in vergrößerter Darstellung. Er besteht aus einer Reihe von Zeichen 10, die aus Punkten 10' zusammengesetzt sind und die in verschlüsselter oder insbesondere unverschlüsselter Form, also Klarschrift, die zu übertragende Mitteilung enthalten. Zum Lesen der Zeichen 10 wird der Aufnahmebereich 5 und somit auch der Aufdruck 3 mit einer Rasterung 11 unterteilt, deren Rastweite höchstens so groß ist wie ein Punkt 10' der Zeichen 10. Damit kann mit zwei Rastpunkten 10' in sicherer Weise die Zeichenstärke abgetastet werden. Die Rasterung 11 weist in der Breite des Aufnahmefeldes 5 mindestens etwa 1000 Rastpunkte auf, so daß bei einer Breite des Aufnahmefeldes von 600 mm eine Rastbreite von 0,6 mm und damit eine zu ermittelnde Zeichenstärke von 1,2 mm entsteht. Je nach Höhenabstand der Aufnahmekamera 4 vom Aufdruck 3 kann die Rastbreite auch 0,4 mm, d.h. die Zeichenstärke 0,8 mm bei einer Zeichenhöhe von 6 mm betragen.

Um die Lage des Aufdruckes 3 innerhalb des Aufnahmefeldes 5 zu ermitteln, sind z.B. am Rand Erkennungsbalken 12 vorgesehen. Diese weisen eine Breite von mindestens drei Rastbreiten auf, so daß sie sich eindeutig von den anderen Zeichen unterscheiden. Auf Grund der Zuordnung dieser Erkennungsbalken 12 kann die Lage des Aufdruckes 3, insbesondere dessen Winkellage zur Transportrichtung festgestellt werden, worauf die Zeichen 10 identifiziert werden können. Das Suchen selbst erfolgt mit einem geeigneten Suchverfahren. Infolge des hohen Auflösevermögens haben Schräglagen bis zu etwa 20$^{o}$ gegenüber der Hori-

zontalen keinen Einfluß auf das Ergebnis der Auswertung. Auch kann der Aufdruck 3 unter einer Klarsichtfolie, wie z.B. einer Schrumpfpackung, angebracht sein. Da die Transportgeschwindigkeit des Stückgutes während der Auswertung berücksichtigt wird, kann der Transport den jeweiligen Erfordernissen angepaßt werden. Schließlich kann der Aufdruck 3 mit bekannten und üblichen Druckern, wie Matrix-, Laser- oder Injektordruckern hergestellt werden.

Patentansprüche

1. Lesevorrichtung für Aufdrucke auf insbesondere bewegtem Stückgut, das auf einem Transportmittel durch das Aufnahmefeld einer Aufnahmekamera bewegt wird, wobei ein im Sichtfeld der Aufnahmekamera befindlicher, aus Punkten gebildeter Aufdruck erfaßt und in Signale zur Steuerung nachfolgender Abläufe umgesetzt wird, dadurch gekennzeichnet, daß das Aufnahmefeld (5) durch eine Rasterung (11) aufgelöst wird, deren Rastweite höchstens so groß ist wie der Durchmesser eines Punktes (10') des Zeichens (10) im Aufdruck (3).

2. Lesevorrichtung nach Anspruch 1, dadurch gekennzeichnet, daß die Rasterung (11) der Aufnahmekamera (4) mindestens etwa 1000 Bildpunkte in Querrichtung des Aufnahmefeldes (5) aufweist.

3. Lesevorrichtung nach Anspruch 1 oder 2, dadurch gekennzeichnet, daß die Rastweite etwa 0,4 bis 0,6 mm beträgt.

4. Lesevorrichtung nach einem der Ansprüche 1 bis 3, dadurch gekennzeichnet, daß die Zeichen (10) des Aufdruckes (3) aus Klarschrift bestehen.

5. Lesevorrichtung nach einem der Ansprüche 1 bis 4, dadurch gekennzeichnet, daß zur Feststellung der Winkellage des Aufdruckes (3) zur Transportrichtung mindestens ein Erkennungsbalken (12) vorgesehen ist, dessen Breite mindestens die Breite von drei Rastbreiten aufweist.

FIG. 1

FIG. 2